Europäisches Patentamt

European Patent Office

Office européen des brevets

(11) Numéro de publication: **0 002 627**
**A1**

## (12) DEMANDE DE BREVET EUROPEEN

(21) Numéro de dépôt: **78400178.6**

(22) Date de dépôt: **14.11.78**

(51) Int. Cl.²: **H 01 R 41/00**

(30) Priorité: **13.12.77 FR 7738160**

(43) Date de publication de la demande:
**27.06.79 Bulletin 79/13**

(84) Etats contractants désignés:
**BE CH DE LU NL**

(71) Demandeur: **ETABLISSEMENTS TOURTELLIER S.A.
14, Avenue de Lutterbach
F-68059 Mulhouse(FR)**

(72) Inventeur: **Tourtellier, Jean-Louis
18, Avenue de Lutterbach
F-68200 Mulhouse(FR)**

(74) Mandataire: **Aubertin, François
Cabinet Bugnion Associes S.A.R.L. 4, rue de Haguenau
F-67000 Strasbourg(FR)**

(54) Balai pour collecteur.

(57) L'invention concerne un balai pour collecteur d'un chariot circulant dans un monorail tubulaire électrifié utilisé dans les installations de manutention.

Ce balai est caractérisé en ce qu'il comporte une embase en matière isolante (19) pourvue de moyens d'encliquetage (26) solidaires d'éléments conducteurs d'électricité (34) reliés au collecteur et coopérant avec une tête saillante (43) en matière conductrice constituant un frotteur de contact (24) en forme de lame réalisé en un matériau conducteur d'électricité tel qu'un alliage à base de cuivre et de carbone ou fritté.

L'invention concerne les moyens moteurs pour le transport des charges dans les installations de manutention.

EP 0 002 627 A1

·/ · · ·

Croydon Printing Company Ltd.

# FIG. 1

- 1 -

Balai pour collecteur

L'invention concerne un balai pour collecteur d'un chariot circulant dans un monorail tubulaire électrifié utilisé dans les installations de manutention.

Dans les installations de manutention, on utilise un monorail tubulaire électrifié le long duquel circulent des chariots pourvus de collecteurs. Ces collecteurs comportent des balais.

On connaît déjà l'utilisation de balais, pièces conductrices réalisées en cuivre, destinés à assurer la liaison électrique entre les conducteurs électriques du monorail tubulaire et les chariots auxquels sont suspendues les charges à transporter. Les balais, constamment en contact avec les conducteurs électriques, sont soumis à un glissement en raison de la mobilité des chariots. De ce fait, il y a une usure rapide de la partie du balai frottant sur le conducteur électrique et il est nécessaire de pourvoir fréquemment à leur remplacement. Toutefois, l'usure ne se réalise que sur une faible partie de la pièce en cuivre mais il faut remplacer toute la pièce. Il en résulte des frais d'entretien relativement élevés.

Par ailleurs, pour effectuer le remplacement du balai, on est obligé de démonter l'ensemble du porte-balais, ce qui entraîne une perte de temps assez importante. Pour pallier à cet inconvénient, on prévoit dans l'ensemble de l'installation de manutention un ou plusieurs chariots de rechange pour remplacer le chariot présentant des balais défectueux par un chariot en état de fonctionnement. Toutefois, ces chariots de rechange augmentent le prix de l'installation. On peut également arrêter momentanément l'installation de manutention pour procéder au remplacement du ou des balais. Cependant, ces arrêts diminuent le rendement de l'installation et, fréquemment, ces arrêts sont impensables dans des installations de manutention complexes.

Dans certaines installations de manutention, les conducteurs électriques sont nus et disposés à l'extérieur du rail de la voie suspendue. Pour éviter tout risque d'électrocution, ces conducteurs sont alimentés en électricité présentant une tension dite de sécurité de l'ordre de quarante volts. En raison de ce faible voltage, les charges transportées sont relativement faibles. Toutefois, dans certaines installations de manutention, il est nécessaire de transporter des charges élevées. De ce fait, il faut alimenter les chariots en énergie électrique de tension de deux cent vingt, trois cent quatre vingt, cinq cents...volts et il faut utiliser des conducteurs à puissance qui doivent nécessairement présenter des dispositions de sécurité pour éviter toute électrocution. A cet effet, on a conçu un profil en matière isolante présentant à l'une de ses extrémités des moyens d'encliquetage du conducteur électrique placés en retrait par rapport à son chant longitudinal externe. Les balais des chariots se déplacent entre deux lèvres souples solidaires du chant longitudinal externe et placées au-delà des moyens d'encliquetage du conducteur électrique.

Toutefois, les balais font saillie par rapport à ces lèvres et on risque de toucher, par inadvertance, la partie visible du balai, cette partie étant également conductrice d'électricité.

La présente invention a pour but de remédier aux différents inconvénients cités ci-dessus. L'invention, telle qu'elle est caractérisée dans les revendications, résoud le problème consistant à créer un balai pour collecteur d'un chariot circulant dans un monorail tubulaire électrifié utilisé dans les installations de manutention, balai dans lequel seule la partie usée est à remplacer.

Les avantages obtenus grâce à cette invention consistent essentiellement en ceci que le remplacement se faisant par simple encliquetage, on réduit d'une manière importante les pertes de temps nécessaires pour le remplacement d'un balai connu. Par ailleurs, seule la partie

- 3 -

amovible du balai est conducteur d'électricité et, du fait qu'elle se trouve à l'intérieur du profil en matière isolante, on supprime tout risque d'électrocution. La présente invention a donc deux buts : celui de réduire les frais pour le remplacement des balais usés et celui d'augmenter la sécurité des installations de manutention pourvues de conducteurs à puissance.

Dans ce qui suit, l'invention est exposée plus en détail à l'aide de dessins représentant seulement un mode d'exécution.

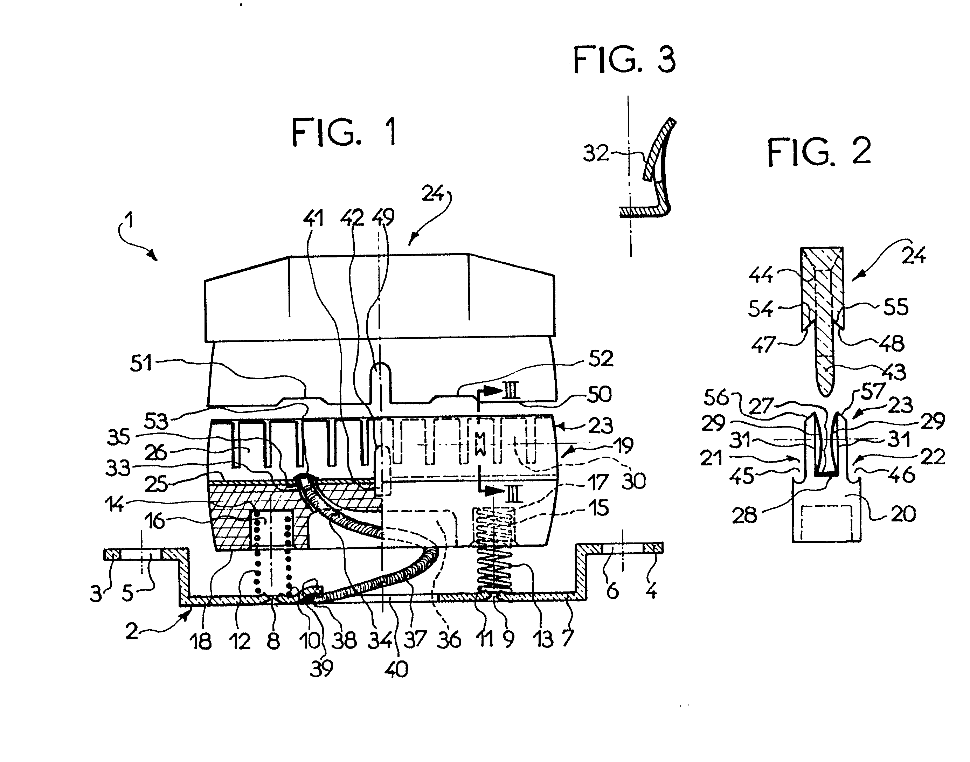

La figure 1 est une vue en élévation, en coupe partielle, d'un balai pour collecteur conforme à l'invention ; la figure 2 est une vue latérale du balai, le frotteur de contact étant représenté en coupe ; la figure 3 est une vue partielle selon ligne de coupe III-III de la figure 1.

Les figures représentent un balai 1 comportant un étrier 2 réalisé en une matière conductrice d'électricité tel qu'un alliage à base de cuivre et de carbone ou fritté. Cet étrier 2 présente deux ailes 3 et 4 dans lesquelles sont pratiqués des trous 5 et 6 pour la mise en place d'éléments de fixation permettant de rendre le balai 9 solidaire du collecteur (non représenté). Les deux ailes 3 et 4 font saillies par rapport à la partie centrale 7.

Cette partie centrale 7 comporte deux ergots 8 et 9 servant d'éléments de centrage à l'une des extrémités 10, 11 d'éléments élastiques tels que ressorts 12, 13. L'autre extrémité 14, 15 de ces éléments élastiques 12, 13 est logée dans des trous borgnes 16, 17 pratiqués dans le chant 18 d'une embase en matière plastique 19. Cette embase 19 est constituée d'un corps 20 comportant deux décrochements 21, 22 permettant d'obtenir une extrémité amincie 23 dont la largeur correspond à celle d'un charbon 24. On pratique dans cette extrémité amincie 23 une rainure 25 dans laquelle on loge un ressort multicontact 26. Celui-ci est constitué d'un fond 27, s'appliquant contre le fond 28 de la rainure 25, et de deux ailes bombées 29 constituées de lamelles 30, venant se placer contre les deux faces internes 31 de la rainure 25. Chaque lamelle 30 comporte un ergot anti-arrachement 32.

- 4 -

On fixe, par un moyen quelconque telle qu'une brasure, sur le fond 27 du ressort multicontact 26 l'extrémité 33 et une tresse de connexion 34 réalisée en un matériau conducteur d'électricité. Cette tresse 34 est enfilée à travers un trou 35 dans le corps 20 de l'embase 19. Ce trou 35 débouche d'un côté dans le fond 28 de la rainure 25 et de l'autre côté dans un évidement 36 pratiqué dans le chant 18 de l'embase 19. Cet évidement 36 sert de logement-dégagement au coude 37 de la tresse 34 lors de l'assemblage des différents éléments composant le balai 1. L'autre extrémité 38 de la tresse 34 est fixée par soudure à une languette 39 solidaire d'une lumière 40 réalisée dans la partie centrale 7 de l'étrier 2.

Le corps 20 présente un têton de positionnement et d'arrêt 41 dont la tête 42, faisant saillie par rapport au fond 28 de la rainure 25, est disposée entre les deux ailes bombées 29 du ressort multicontact 26. Du fait que les deux ailes soient bombées, ces ailes forment pinces maintenant fermement le charbon 24.

Le balai 1 comporte également un charbon en matière conductrice 24 formant frotteur de contact et, de ce fait, est réalisé en un matériau conducteur d'électricité tel qu'un alliage à base de cuivre et de carbone ou fritté. Ce charbon 24, présentant la forme d'une lame, est constitué d'une tête saillante 43 aboutant à un corps 44 dont la largeur correspond à celle de l'extrémité amincie 23 du corps 20 de l'embase en matière isolante 19. Les épaulements 45, 46, obtenus par suite de la réalisation des décrochements 21, 22, servent de butées contre lesquelles viennent s'appuyer les chants 47, 48 de l'extrémité amincie 23 du corps 20, ce qui limite la pénétration du charbon 24 dans l'embase 19.

La tête saillante 43 présente un évidement 49 dans lequel vient se loger la tête 42 du têton de positionnement 41 de l'embase 19, ce qui évite un glissement longitudinal du charbon 24 par rapport à l'embase 19. La hauteur du corps 44 du charbon 24 est telle que la partie conductrice d'électricité du balai se trouve intégralement logée dans le profil en matière isolante pourvu des conducteurs à puissance.

Le chant 50 de la tête saillante 43 comporte deux dégagements symétri-

ques 51, 52 dans lesquels vient se placer le bourrelet de brasure 53
liant la tresse 34 et le ressort multicontact 26.

Les chants 47, 48 comportent une saignée 54, 55 coopérant avec son complémentaire réalisé dans les deux lèvres supérieures 56, 57 de l'embase
19 pour éviter l'écartement sous la pression du ressort multicontact 26.

- 1 -

Revendications de brevet

1. Balai pour collecteur d'un chariot circulant dans un monorail tubulaire électrifié utilisé dans les installations de manutention, caractérisé en ce qu'il comporte une embase en matière isolante (19) pourvue de moyens d'encliquetage (26) solidaires d'éléments conducteurs d'électricité (34) reliés au collecteur et coopérant avec une tête saillante (43) en matière conductrice constituant un frotteur de contact (24) en forme de lame réalisé en un matériau conducteur d'électricité tel qu'un alliage à base de cuivre et de carbone ou fritté.

2. Balai selon 1, caractérisé en ce que l'embase (19), composée d'un corps (20) aboutant par l'intermédiaire de deux décrochements (21, 22) à une extrémité amincie (23), comporte un ressort multicontact (26) logé dans une rainure (25) réalisée dans l'extrémité amincie (23) dont la largeur correspond à la largeur du charbon (24).

3. Balai selon 1 et 2, caractérisé en ce que les moyens d'encliquetage constitués par le ressort multicontact (26) sont composés d'un fond (27) s'appliquant contre le fond (28) de la rainure (25) réalisé dans l'extrémité amincie (23) de l'embase (19) et de deux ailes bombées (29) venant se placer contre les deux faces internes (31) de la rainure (25) et pourvues d'ergots anti-arrachements (32).

4. Balai selon 1 et 2, caractérisé en ce que les éléments conducteurs d'électricité sont une tresse de connexion en cuivre (34) dont une des extrémités, enfilée dans un trou (35) réalisé dans le corps (20) de l'embase (19), est rendue solidaire du ressort multicontact (26) et dont l'autre extrémité (38) est fixée à une languette (39) solidaire d'une lumière (40) réalisée dans la partie centrale (7) d'un étrier (2) réalisé en une matière conductrice d'électricité tel qu'un alliage à base de cuivre et de carbone ou fritté, le bourrelet de brasure (53) solidarisant ensemble la tresse (34) et le ressort multicontact (26) venant se placer dans des dégagements (51, 52) réalisés dans le chant (50) de la tête saillante (43).

5. Balai selon 1 et 2, caractérisé en ce que le chant (18) du corps (20) de l'embase (19) comporte un évidement (36) dans lequel débouche

00002627

le trou (35) de passage de la tresse (34), cet évidement (36) servant de logement-dégagement d'un coude (37) de la tresse (34).

6. Balai selon 1 et 2, caractérisé en ce que le chant (18) du corps (20) de l'embase (19) comporte des trous borgnes (16, 17) dans lesquels vient se loger une des extrémités (14, 15) d'éléments élastiques (12, 13) dont l'autre extrémité (10, 11) coiffe des ergots (8, 9), servant d'éléments de centrage, solidaire de la partie centrale (7) de l'étrier (2), cette partie centrale (7) aboutant à des ailes (3, 4) percées pour la fixation de l'étrier (2) respectivement du balai (1) sur le collecteur.

7. Balai selon 1 et 2, caractérisé en ce que le corps (20) de l'embase (19) comporte un téton de positionnement et d'arrêt (41) dont la tête (42), faisant saillie par rapport au fond (28) de la rainure (25) réalisée dans l'extrémité amincie (23) de l'embase (19), est placée entre les ailes bombées (29) du ressort multicontact (26).

8. Balai selon 1, caractérisé en ce que le charbon (24) comporte un corps (44) et une tête saillante (43) coopérant avec les moyens d'encliquetage (26) pour rendre solidaires les deux pièces composant le balai, le corps (44) ayant une largeur identique à l'extrémité amincie (23) de l'embase (19).

9. Balai selon 1 et 8, caractérisé en ce que le charbon (24) comporte deux épaulements (45, 46) disposés de part et d'autre de la tête saillante (43) et servant de butées au chant (47, 48) de l'extrémité amincie (23) de l'embase (19) pour limiter la pénétration de la tête saillante (43) du charbon (24) dans la rainure (25) de l'extrémité amincie (23) de l'embase (19).

10. Balai selon 1 et 8, caractérisé en ce que la tête saillante (43) comporte un évidement (49) dans lequel vient se loger le téton de positionnement et d'arrêt (41) solidaire de l'embase (19) pour annihiler tout glissement longitudinal du charbon (24) par rapport à l'embase (19).

FIG. 3

FIG. 1

FIG. 2

0002627

**Office européen des brevets**

## RAPPORT DE RECHERCHE EUROPEENNE

Numéro de la demande

EP 78 40 0178

| | DOCUMENTS CONSIDERES COMME PERTINENTS | | CLASSEMENT DE LA DEMANDE (Int. Cl.²) |
|---|---|---|---|
| Catégorie | Citation du document avec indication, en cas de besoin, des parties pertinentes | Revendication concernée | |
| A | <u>FR - A - 1 549 990</u> (INSUL-&-CORP) <br> * Page 3 * <br><br> -- | 1 | H 01 R 41/00 |
| A | <u>FR - A - 1 251 397</u> (VERLINDE) <br> * Page 2 * <br><br> -- | 1 | |
| A | <u>DE - C - 587 571</u> (A.E.G.) <br><br> ---- | 1 | |

**DOMAINES TECHNIQUES RECHERCHES (Int. Cl.²)**

H 01 R 41/00
B 60 L 5/20
5/22

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 12-03-1979 | MOBOUCK |